# EUROPÄISCHE PATENTSCHRIFT

(11) **EP 0 650 426 B1**
(45) Veröffentlichungstag und Bekanntmachung des Hinweises auf die Patenterteilung: **12.03.1997**
(21) Anmeldenummer: 93915896.0
(22) Anmeldetag: 13.07.1993
(51) Int. Cl.: B60T 8/26, B60T 8/94

(54) **BLOCKIERGESCHÜTZTE HYDRAULISCHE BREMSANLAGE MIT BREMSKRAFTREGLER**
ANTI-LOCK HYDRAULIC BRAKING SYSTEM WITH BRAKING FORCE REGULATOR
SYSTEME DE FREINAGE HYDRAULIQUE ANTI-BLOCAGE COMPRENANT UN REGULATEUR DE PUISSANCE DE FREINAGE

(30) Priorität: 21.07.1992 DE 4224007
(43) Veröffentlichungstag der Anmeldung: 03.05.1995
(73) Patentinhaber: ITT Automotive Europe GmbH, 60488 Frankfurt am Main (DE)
(72) Erfinder: BECK, Erhard, D-35781 Weilburg (DE); REINARTZ, Hans-Dieter, D-60439 Frankfurt am Main (DE); VOLZ, Peter, D-64291 Darmstadt (DE)
(86) Internationale Anmeldenummer: EP9301834
(87) Internationale Veröffentlichungsnummer: WO9402340

(56) Entgegenhaltungen:
- EP-A- 0 462 867
- DE-A- 3 301 902
- DE-A- 3 419 311
- DE-A- 3 700 282
- DE-A- 3 737 316
- DE-A- 3 737 726
- DE-A- 4 029 332
- GB-A- 2 236 156
- BOSCH TECHNISCHE BERICHTE Antiblockiersystem (ABS) Band 7 (1980) Heft 2 ISSN 0006-789 X

## Beschreibung

Die vorliegende Erfindung betrifft eine blockiergeschützte hydraulische Bremsanlage mit Bremskraftregler gemäß dem Oberbegriff des Anspruches 1.

Eine derartige Bremsanlage ist beispielsweise aus der EP-A0 462 867, Fig. 1 und 2 bekannt. Der Umschaltdruck, also der Druck, bei welchem der Bremskraftregler mit der Druckminderung beginnt, wird bei intakter Blockierschutzfunktion heraufgesetzt, so daß die Kennlinie der eines üblichen lastabhängigen Bremskraftreglers bei beladenem Fahrzeug entspricht. In Fig. 3 weist die EP-A 0 462 867 keinen separaten Sperrkolben auf, sondern der zur Druckminderung dienende Stufenkolben des Bremskrafreglers selbst ist zur Erhöhung des Umschaltdruckes an einer Stirnseite in Ventilöffnungsrichtung dem Förderdruck einer ABS-Pumpe ausgesetzt. Die beaufschlagte Fläche ist dabei so bemessen, daß der Pumpendruck den Umschaltdruck lediglich erhöht, den Bremskraftregler aber nicht sperrt. Da also der Bremskraftregler immer wirksam ist, ergibt sich während einer Blockierschutzregelung ein ständiges Wechselspiel zwischen Blockierschutzfunktion und Bremskraftregler.

Um dem abzuhelfen, wurde in der DE-A 37 42 173 eine blockiergeschützte Bremsanlage vorgeschlagen, in deren Hinterachsbremskreis ein Bremskraftregler eingebaut ist, der mit Hilfe einer elektromagnetischen Sperrvorrichtung solange außer Kraft gesetzt wird, wie die Blockierschutzfunktion ihre Aufgabe erfüllt. Sollte jedoch ein Defekt an der Blockierschutzeinrichtung auftreten, so wird die Sperre gelöst und der Bremskraftregler nimmt seine Druckminderfunktion bei jeder Bremsung auf. Auf diese Weise wird, solange die Blockierschutzfunktion intakt ist, die höchstmögliche Hinterachsbremskraft bis zur Blockiergrenze ausgenutzt. Andererseits wird gewährleistet, daß auch bei Ausfall der elektronischen Bremsdruckreglung ein Blockieren der Hinterräder vor den Vorderrädern bei einer Pedalbremsung verhindert wird. So wird gegenüber Bremsanlagen ohne Bremsdruckminderer ein Zugewinn an Fahrstabilität erzielt, wenn die Blockierschutzfunktion ausfällt. Dabei ist jedoch von Nachteil, daß zusätzliche elektrische Leitungen sowie Steuersignale notwendig sind, um die Funktion des Bremskraftreglers zu gewährleisten. Außerdem ist zu bedenken, daß ein Ausfall der Blockierschutzfunktion den Ausnahmefall darstellen sollte, so daß es nach Möglichkeit niemals zu einem Einsatz des Bremskraftreglers kommen sollte. Tritt aber tatsächlich einmal, möglicherweise erst nach Jahren ein Defekt auf, so hat der Bremskraftregler über die gesamte Lebensdauer der Bremsanlage seine gesperrte Stellung eingenommen und ist möglicherweise durch Verschmutzung oder Verklemmungen nicht mehr funktionstüchtig.

Die Aufgabe der vorliegenden Erfindung besteht daher darin, eine Bremsanlage der anfangs genannten Art zu schaffen, die für den Bremskraftregler ohne zusätzliche elektronische Elemente auskommt und auch nach jahrelanger Funktionstüchtigkeit des Blockierschutzes bei einem Ausfall eine zuverlässige Druckminderung durch den Bremskraftregler gewährleistet, die aber während einer Blockierschutzregelung nicht durch den Bremskraftregler beeinträchtigt wird.

Diese Aufgabe wird erfindungsgemäß gelöst durch die kennzeichnenden Merkmale des Hauptanspruchs. Das Prinzip der Erfindung besteht also darin, daß bei jeder unkritischen Bremsung nach Überschreiten des Umschaltdruckes der Bremskraftregler seine Druckminderfunktion aufnimmt und so lange durchführt, wie die Bremsschlupfwerte sich im unkritischen Bereich befinden. Sobald jedoch ein zu hoher Bremsschlupf festgestellt wird und die Blockierschutzfunktion der Bremsanlage einsetzt, wird der Bremskraftregler mit einer Sperrvorrichtung außer Kraft gesetzt, so daß jetzt die elektronisch gesteuerte Bremsdruckregelung abläuft. Dabei erspart die Betätigung der Sperrvorrichtung durch den Förderdruck der Pumpe eine zusätzliche elektrische Zuleitung sowie entsprechende elektronische Signale.

Indem der Bremskraftregler unmittelbar an der Radbremse in die Schaltung eingesetzt ist, wird die Verwendung eines gebräuchlichen Ventilblocks ohne weitere Veränderungen ermöglicht. Der Bremskraftregler kann an der Radbremse montiert werden.

Für den Einbau ist dabei von Vorteil, wenn der Bremskraftregler als Einschraubregler konstruiert ist, also nur wenig Platz benötigt.

Weitere vorteilhafte Merkmale ergeben sich aus der folgenden Beschreibung von drei Zeichnungen. Es zeigt:
- Fig. 1: eine erfindungsgemäße Bremsanlage;
- Fig. 2: einen Bremskraftregler, der für eine erfindungsgemäße Bremsanlage vorgesehen ist;
- Fig. 3: eine weitere Ausführungsform eines geeigneten Bremskraftreglers.

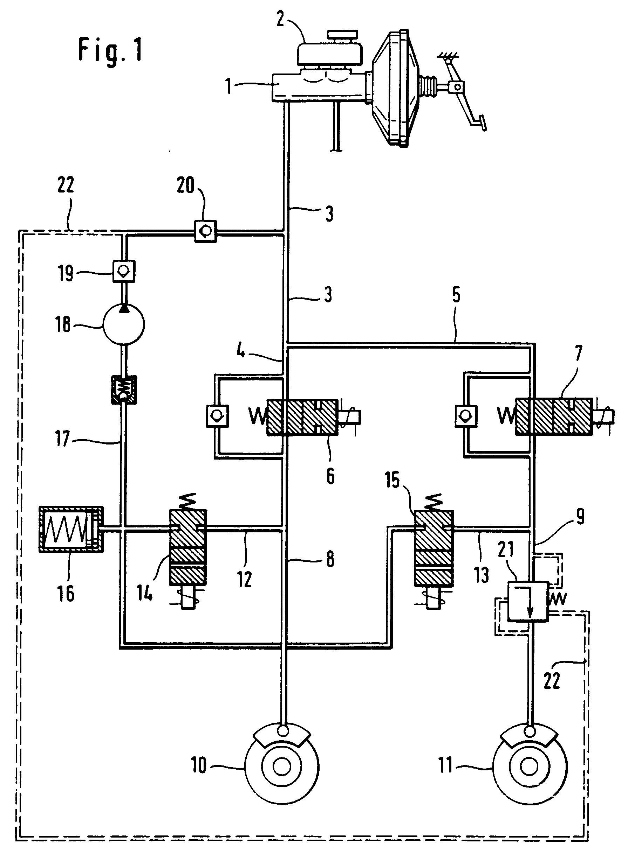

Die Bremsanlage nach Fig. 1 arbeitet nach dem Rückförderprinzip. Die Bremskreisaufteilung ist diagonal, so daß die Bremskreise I und II identisch aufgebaut sind. Deswegen ist hier nur der Bremskreis II dargestellt.

Vom Hauptbremszylinder 1, der an den Druckmittelbehälter 2 angeschlossen ist wird die Hauptbremsleitung 3 bei einer pedalbetätigten Bremsung unter Druck gesetzt. Dieser pflanzt sich in die Bremszweigleitungen 4 und 5 und die Zuführungen 8 und 9 zu den Radbremsen 10 bzw. 11 fort. In den Bremszweigleitungen 4 und 5 sind elektromagnetisch betätigte, stromlos geöffnete Einlaßventile 6 und 7 angeordnet. Von der Verknüpfungsstelle der Bremszweigleitungen 4 und 5 mit den Zuführungen 8 bzw. 9 führt jeweils eine Auslaßleitung 12 bzw. 13 zum Niederdruckspeicher 16. In jeder der Auslaßleitungen 12 und 13 ist jeweils ein elektromagnetisch betätigtes, stromlos geschlossenes Ventil 14 bzw. 15 angeordnet. Vom Niederdruckspeicher 16 führt die Saugleitung 17 zur Saugseite der Pumpe 18, deren Druckseite über die Druckleitng 19 und das Rückschlagventil 20, welches zur Druckseite der Pumpe hin sperrt, an die Hauptbremsleitung 3 angeschlossen ist.

In der abgebildeten Bremsanlage ist die Radbremse 11 einem Hinterrad zugeordnet, während die Radbremse 10 zu einem Vorderrad gehört. Deswegen ist in der Zuführung 9 zur Radbremse 11 der Bremskraftregler 21 eingefügt, dessen Druckminderventil drucklos offen ist und von drei Drücken gesteuert wird. In Öffnungsrichtung wirkt der vom Bremskraftregler aus gesehen hauptzylinderseitige Druck, der am Bremskraftregler ansteht, während in Schließrichtung der radbremseitige Druck wirkt. Schließlich wirkt noch in Öffnungsrichtung der in der Steuerleitung 22 anstehende Druck. Dieser Druck stammt aus der Druckleitung 19 zwischen der Druckseite der Pumpe 18 und dem Rückschlagventil 20, so daß immer nur der Druck, welcher von der Pumpe erzeugt wird, den Bremskraftregler in seine Öffnungsstellung bringt, während die Steuerleitung vom Hauptzylinderdruck unbeeinflußt bleibt.

Dadurch stellt sich für den Bremskraftregler 21 folgende Funktionsweise dar:

So lange die Pumpe 18 nicht läuft, d.h., so lange die Bremsschlupfwerte einen bestimmten kritischen Wert nicht überschreiten, arbeitet der Bremskraftreger 21 wie in jeder herkömmlichen Bremsanlage. Überchreitet der der Radbremse 11 zugeführte Bremsdruck einen bestimmten Umschaltdruck, schließt sich das Druckminderventil des Bremskraftreglers 21, und jeder weitere hauptzylinderseitige Druckanstieg wird nur noch gemindert an die Radbremse weitergegeben. Diese Funktion ist bekannter Stand der Technik.

Überschreitet jedoch der Bremsschlupf an einer der Radbremsen 10 oder 11 einen kritischen Schwellenwert, so daß die Fahrstabilität gefährdet ist, läuft die Pumpe 18 an. Sie fördert aus dem Niederdruckspeicher 16, der durch Betätigung der Auslaßventile 14 bzw. 15 gefüllt wird. Diese Art der Regelung ist aus dem Stand der Technik ebenfalls bekannt. Indem die Pumpe 18 über die Druckleitng 19 Druckmittel in die Hauptbremsleitung 3 fördert, baut sich der Steuerleitung 22 ein Steuerdruck auf. Dieser bewirkt, daß der Bremskraftregler an seiner Bremsdruckminderfunktion gehindert wird. Ab sofort erfolgt die Bremsdruckregelung nur noch über die elektromagnetisch betätigten Regelventile, d.h. die Einlaßventile 6 und 7 sowie die Auslaßventile 14 und 15.

Durch diese Schaltungsanordnung ergibt sich, daß bei jeder Bremsung, die den Umschaltdruck des Bremskraftreglers 21 überschreitet, der Bremskraftregler 21 betätigt wird. Ein Festsetzen der Kolben oder andere Defekte, die durch langen Stillstand bedingt sein können, fallen dadurch weg. Andererseits wird auch die Blockierschutzfunktion der Bremsanlage nicht so häufig benötigt wie ohne Bremskraftregler, weil durch den Bremskraftregler 21 der Bremsschlupf der Hinterräder weitestgehend im zulässigen Rahmen gehalten wird.

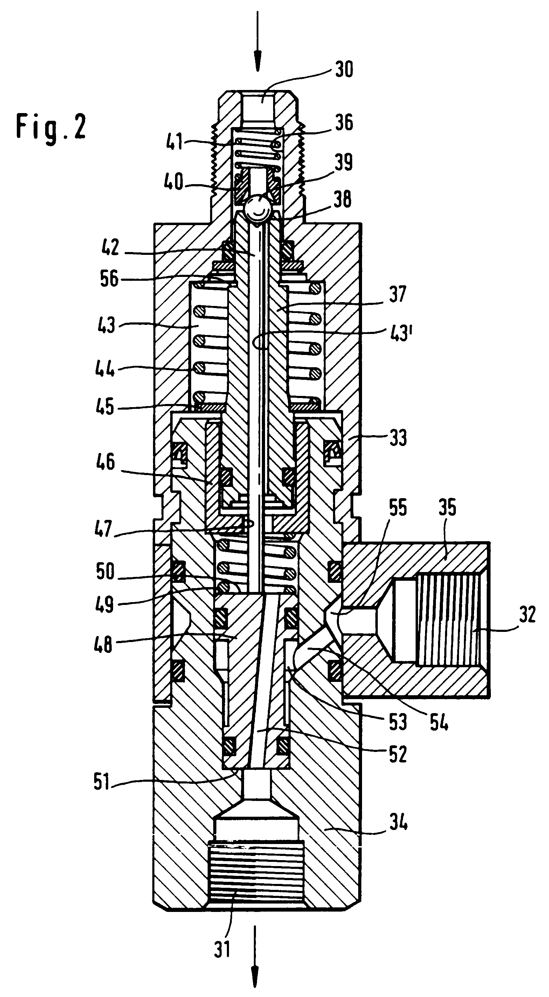

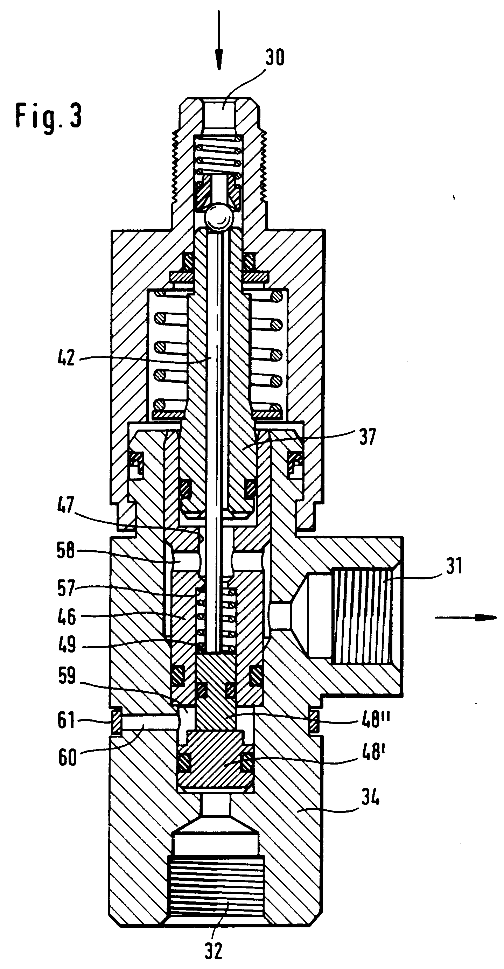

Wie nun ein solcher Bremskraftregler aussehen kann, zeigen beispielsweise die Figuren 2 und 3.

Bei dem in Fig. 2 dargestellten Bremskraftregler sind Einlaß 30 und Auslaß 31 koaxial angeordet. Der Anschluß für den Einlaß 30, der in der Schaltung dem Hauptbremszylinder zugewandt ist, besitzt ein Außengewinde. Am Auslaß 31, der der Radbremse zugewandt ist, ist ein Innengewinde angebracht. Dadurch ist eine Verwechselung der beiden Anschlüsse unmöglich. Radial zur Achse zwischen Einlaß 30 und Auslaß 31 ist der Steueranschluß 32 angebracht, welcher an die Druckseite der Pumpe angeschlossen ist. Dabei besteht das Gehäuse des Reglers im wesentlichen aus drei Teilen. Der Einlaß 30 ist an die Gehäusehülse 33 angeformt, während der Auslaß 31 am Gehäusekörper 34 ausgebildet ist. Gehäusekörper 34 und Gehäusehülse 33 sind im wesentlichen rotationssymmetrisch. Der Steueranschluß 32 befindet sich am Anschlußring 35, welcher auf den Gehäusekörper 34 aufgeschoben ist. Als Positionierhilfe besitzt der Gehäusekörper 34 zum Auslaß 31 hin eine stufige Erweiterung. Dabei durchragt der Gehäusekörper 34 den Anschluß 35. Auf dieses den Anschlußring 35 durchragende Ende des Gehäusekörpers 34 ist die Gehäusehülse 33 geschoben und mit dem Gehäusekörper 34 verstemmt, so daß auch der Anschlußring 35 durch die Gehäusehülse 33 fixiert ist.

Die Gehäusehülse 33 besitzt vom Einlaß 30 ins Gehäuseinnere eine Einlaßbohrung 36, in welcher das dünnere Ende eines Regelkolbens 37 abgedichtet geführt ist. Das einlaßseitige Ende des Regelkolbens 37 ist als Ventilsitz 38 ausgebildet. Dieser Ventilsitz 38 wirkt mit einem Ventilschließglied 39 zusammen, welches einlaßseitig vom Regelkolben 37 angeordnet ist und von einem Zentrierelement 40, welches von einer Ventilfeder 41 zum Regelkolben hin beaufschlagt ist, gegen den Stößel 42 gedrückt wird, welcher die Axialbohrung 43' des Regelkolbens 37 durchsetzt.

Die Einlaßbohrung 36 erweitert sich zu einem druckmittelfreien Raum 43, in welchem eine Regelfeder 44 angeordnet ist, welche den Regelkolben 37 über eine Ringscheibe 45 in Öffnungsrichtung des Ventils 38,39 beaufschlagt. Das dickere Ende des Regelkolbens 37 ist in der Führungshülse 46 abgedichtet geführt. Letztere ist im Gehäusekörper 34 verstemmt. Sie besitzt eine axiale Öffnung 47, durch welche der Stößel 42 ragt. Das die Führungshülse 46 durchragende Ende des Stößels 42 liegt an der dem Regelkolben 37 zugewandten Stirnseite 50 des Sperrkolbens 48 an und wird mit diesem bewegt. Die Ruhestellung des Sperrkolbens 48 an einer auslaßseitigen Stufe des Gehäusekörpers 34 wird durch die Rückstellfeder 49 bestimmt, welche zwischen der Führungshülse 46 und dem Sperrkolben 48 angeordnet ist. Die Stirnseiten 50 und 51 des Sperrkolbens 48 sind durch eine Durchlaßbohrung 52 miteinander verbunden. Diese Durchlaßbohrung 52 ist schräg durch den Sperrkolben 48 geführt, so daß sie auslaßseitig zentral aus dem Sperrkolben 48 tritt, jedoch an der Stirnseite 50, die den Regelkolben zugewandt ist, dezentral endet. Dadurch kann der Stößel 42 nicht in die Durchlaßbohrung 52 gelangen.

Auch der Sperrkolben 48 ist gestuft ausgeführt, wobei jeweils der größere und der kleinere Umfang gegen die Wand des Gehäusekörpers 34 abgedichtet sind. Zwischen den Abdichtungen des Sperrkolbens 48 ist die ringförmge Steuerkammer 53 angeordnet, welche mit dem Steueranschluß 32 verbunden ist. Dazu besitzt die Steuerkammer 53 eine Verbindungsbohrung 54 zu der umlaufenden Ringnut 55, welche am Umfang des Gehäusekörpers 34 in dem Axialabschnitt angeordnet ist, wo sich der Steueranschluß 32 befindet. Da der Sperrkolben 48 seinen Abschnitt größeren Durchmessers regelkolbenseitig und seinen Abschnitt kleineren Druckmessers auslaßseitig besitzt, übt ein Druckaufbau über den Steueranschluß 32 auf den Sperrkolben 48 eine Kraft in Richtung auf den Regelkolben aus. Das bedeutet, daß bei Überschreiten der Druckkraft der Rückstellfeder 49 der Sperrkolben 48 zum Regelkolben 37 hin verschoben wird, so daß der Stößel 42 das Ventilschließglied 39 zum Einlaß 30 hin verschiebt. Da der Hub des Regelkolbens 37 zum Einlaß 30 hin durch die Stufe 56 begrenzt ist, wird auf diese Weise eine Sperre erzielt, der Ventilsitz 38 kann sich nicht mehr an das Ventilschließglied 39 anlegen.

Zur Fig. 2 ist anzumerken, daß die abgebildete Stellung des Regelkolbens 37 sowie des Sperrkolbens 48 einer Bremsung entspricht, bei welcher zwar der Umschaltdruck des Bremkraftreglers überschritten ist, jedoch eine Bremsschlupfregelung nicht erfolgt. Bei unbetätigter Bremse ist der Regelkolben 37 bis zum Anschlag an der Führungshülse 46 zurückgefahren. Bei Bremsdruckaufbau verschiebt sich der Regelkolben 37 zum Einlaß 30 hin, da die Wirkfläche in Ventilschließrichtung größer ist als in Ventilöffnungsrichtung. Sobald eine Bremsschlupfregelung einsetzt, wird über den Steueranschluß 32 ein Steuerdruck aufgebaut, welcher den Sperrkolben 48 zum Regelkolben 37 hin verschiebt, so daß das Ventilschließglied 39 außerhalb der Reichweite des Ventilsitzes 38 gelangt.

Das Prinzip des Bremskraftreglers nach Fig. 3 ist dasselbe wie in Fig. 2. Allerdings sind hier der Einlaß 30 und der Steueranschluß 32 koaxial angeordnet, während der Auslaß 31 radial zu den beiden anderen Anschlüssen verläuft. Der obere Abschnitt von Fig. 3 ist bis zur Unterkante des Regelkolbens 37 identisch mit dem von Fig. 2. Der untere Abschnitt unterscheidet sich von Fig. 3 durch die Gestaltung der gehäusefesten Führungshülse 46, die einstückige Fertigung des radialen Anschlusses mit dem Gehäusekörper 34, die Anordnung der Rückstellfeder 49 sowie die Formgebung des Sperrkolbens 48' und 48''.

Der Sperrkolben ist in diesem Falle zweistückig ausgebildet, wobei der dem Steueranschluß 32 zugewandte Sperrkolbenabschnitt 48' einen größeren Durchmesser besitzt als der daran anschließende Sperrkolbenabschnitt 48''. Letzterer ist hier in der langegzogenen Führungshülse 46 abgedichtet geführt. Die Rückstellfeder 49 ist innerhalb der Führungshülse 46 angeordnet und stützt sich mit ihrem einlaßseitigen Ende an einer Innenstufe 57 der Führungshülse 46 ab.

Die Führungshülse 46 besitzt von ihrer zentralen, vom Stößel 42 durchragten Öffnung 47 radiale Kanäle 58, die das Innere der Führungshülse 46 mit dem Auslaß 31 verbinden. Der vom dickeren Sperrkolbenabschnitt 48' einerseits und von der Führungshülse 46 mit dem dünneren Sperrkolbenabschnitt 48'' andererseits begrenzte Ringraum 59 ist druckmittelfrei und besitzt einen radialen Atmosphärenanschluß 60, der mit dem Dichtring 61 vor Verschmutzung geschützt wird.

### Bezugzeichenliste

- 1: Hauptbremszylinder
- 2: Druckmittelbehälter
- 3: Hauptbremsleitung
- 4: Bremszweigleitung
- 5: Bremszweigleitung
- 6: Einlaßventil
- 7: Einlaßventil
- 8: Zuführung
- 9: Zuführung
- 10: Radbremse
- 11: Radbremse
- 12: Auslaßleitung
- 13: Auslaßleitung
- 14: Auslaßventil
- 15: Auslaßventil
- 16: Niederdruckspeicher
- 17: Saugleitung
- 18: Pumpe
- 19: Druckleitung
- 20: Rückschlagventil
- 21: Bremskraftregler
- 22: Steuerleitung
- 30: Einlaß
- 31: Auslaß
- 32: Steueranschluß
- 33: Gehäusehülse
- 34: Gehäusekörper
- 35: Anschlußring
- 36: Einlaßbohrung
- 37: Regelkolben
- 38: Ventilsitz
- 39: Ventilschließglied
- 40: Zentrierelement
- 41: Ventilfeder
- 42: Stößel
- 43: Raum
- 43': Axialbohrung
- 44: Regelfeder
- 45: Ringscheibe
- 46: Führungshülse
- 47: Öffnung
- 48: Sperrkolben
- 48': Sperrkolbenabschnitt
- 48'': Sperrkolbenabschnitt
- 49: Rückstellfeder
- 50: Stirnseite
- 51: Stirnseite
- 52: Durchlaßbohrung
- 53: Steuerkammer
- 54: Verbindungsbohrung
- 55: Ringnut
- 56: Stufe
- 57: Innenstufe
- 58: Kanäle
- 59: Ringraum
- 60: Atmosphärenanschluß
- 61: Dichtring

## Patentansprüche

1. Blockiergeschützte hydraulische Bremsanlage für ein zweiachsiges Fahrzeug,
mit einem pedalbetätigten Hauptbremszylinder (1) der an einen Druckmittelbehälter (2) angeschlossen ist,
mit einer Bremsleitung (3,5) die zumindest zu einer Hinterradbremse (11) führt,
mit einer Auslaßleitung (13), die von der Hinterradbremse (11) zu einem Druckmittelreservoir (16) führt,
mit einer Pumpe (18) die zur Blockierschutzregelung Druckmittel aus dem Druckmittelreservoir (16) in die Bremsleitung (3) fördert,
mit einem elektromagnetisch betätigten, stromlos offenen Einlaßventil (7) in der Bremsleitung (5) und einem elektromagnetisch betätigten, stromlos geschlossenen Auslaßventil (15) in der Auslaßleitung (13),
sowie mit einem ein Ventil (39,38) aufweisenden Bremskraftregler (21) in der Bremsleitung (5), wobei ein Sperrkolben (48) in Öffnungsrichtung des Ventils (39,38) beaufschlagt wird und über einen Stößel (42) das Ventilschließglied des Ventils (39,38) bewegt,
dadurch **gekennzeichnet**, daß durch den Sperrkolben (48) die Druckminderfunktion des Bremskraftreglers (5) außer Kraft setzbar ist und daß die Beaufschlagung des Sperrkolbens (48) in Öffnungsrichtung des Ventils (38,39) hydraulisch durch den Förderdruck der Pumpe (18) und eine Beaufschlagung in Schließrichtung des Ventils (39,38) durch eine Rückstellfeder (49) sowie durch den Druck in der Hinterradbremse (11) erfolgt.

2. Blockiergeschützte hydraulische Bremsanlage nach Anspruch 1, dadurch **gekennzeichnet**, daß der Bremskraftregler (21) unmittelbar vor der Radbremse (11), also zwischen der Radbremse (11) einerseits und Einlaßventil (7) und Auslaßventil (15) andererseits, angeordnet ist.

3. Blockiergeschützte hydraulische Bremsanlage nach Anspruch 1 oder 2, dadurch **gekennzeichnet**, daß der Bremskraftregler (21) ein Einschraubregler mit drei Druckmittelanschlüssen (30,31,32) ist, von denen zwei koaxial und einer radial angelegt und alle drei mit einem Gewinde versehen sind.

## Claims

1. Anti-lock hydraulic brake system for use with a dual-axle automotive vehicle, comprising
a pedal-operated master brake cylinder (1) in communication with a pressure fluid reservoir (2),
a brake conduit (3,5) leading to at least one rear-wheel brake (11),
an outlet conduit (13) leading from the rear-wheel brake (11) to a pressure fluid reservoir (16),
a pump (18) delivering pressure fluid from the pressure fluid reservoir (16) into the brake conduit (3) for anti-lock control,
an electromagnetically actuated inlet valve (7) open in deenergized condition and provided in the brake conduit (5) and an electromagnetically actuated outlet valve (15) closed in de-energized condition and provided in the outlet conduit (13), and
a brake force controller (21) in the brake conduit (5) including a valve (39,38), wherein a blocking piston (48) is acted upon in the opening direction of the valve (39,38) and moves the valve closure member of the valve (39,38) by way of a plunger (42),
characterized in that the pressure-reducing function of the brake force controller (5) can be deactivated by the blocking piston (48), and in that the blocking piston (48) is acted upon hydraulically by the outlet pressure of the pump (18) in the opening direction of the valve (38,39) and by a resetting spring (49) and the pressure in the rear-wheel brake (11) in the closing direction of the valve (39,38).

2. Anti-lock hydraulic brake system as claimed in claim 1, characterized in that the brake force controller (21) is located directly ahead of the wheel brake (11), i.e. between the wheel brake (11), on the one hand, and the inlet valve (7) and outlet valve (15), on the other hand.

3. Anti-lock hydraulic brake system as claimed in claim 1 or claim 2,
characterized in that the brake force controller (21) is of the in-screw type having three pressure fluid connections (30,31,32), two of which are in coaxial and one in radial relationship, and that all three connections are provided with a thread.

## Revendications

1. Système hydraulique de freinage antiblocage, pour véhicule à deux essieux, comprenant
un maître-cylindre de frein (1), actionné par pédale, qui est raccordé à un réservoir d'agent de pression (2),
une conduite de frein (3, 5) qui mène au moins à un frein de roue arrière (11),
une conduite de sortie (13) qui mène du frein de roue arrière (11) à un réservoir d'agent de pression (16),
une pompe (18) qui, pour la régulation antiblocage, refoule de l'agent de pression du réservoir d'agent de pression (16) dans la conduite de frein (3),
une valve d'entrée (7) à actionnement électromagnétique, ouverte en l'absence de courant et disposée dans la conduite de frein (5) et une valve de sortie (15) à actionnement électromagnétique, fermée en l'absence de courant et disposée dans la conduite de sortie (13),
et un régulateur de force de freinage (21) comportant une valve (39, 38) et disposé dans la conduite de frein (5), un piston de blocage (48) étant soumis à une sollicitation dans le sens d'ouverture de la valve (39, 38) et déplaçant l'obturateur de la valve (39, 38) par l'intermédiaire d'une tige-poussoir (42),
caractérisé en ce que la fonction de réduction de pression du régulateur de force de freinage (5) peut être mise hors service au moyen du piston de blocage (48) et en ce que la sollicitation appliquée au piston de blocage (48) dans le sens d'ouverture de la valve (38, 39) s'effectue par voie hydraulique au moyen de la pression de refoulement de la pompe (18) et une sollicitation dans le sens de fermeture de la valve (39, 38) s'effectue au moyen d'un ressort de rappel (49) et au moyen de la pression régnant dans le frein de roue arrière (11).

2. Système hydraulique de freinage antiblocage selon la revendication 1, caractérisé en ce que le régulateur de force de freinage (21) est disposé directement en amont du frein de roue (11), plus précisément entre le frein de roue (11) d'une part et la valve d'entrée (7) et la valve de sortie (15) d'autre part.

3. Système hydraulique de freinage antiblocage selon la revendication 1 ou 2, caractérisé en ce que le régulateur de force de freinage (21) est un régulateur à fixer par vissage comportant trois raccords d'agent de pression (30, 31, 32) dont deux sont disposés suivant le même axe et un troisième radialement et qui sont tous trois pourvus d'un filetage.
